# EUROPÄISCHE PATENTSCHRIFT

(11) **EP 2 145 542 B1**
(45) Veröffentlichungstag und Bekanntmachung des Hinweises auf die Patenterteilung: **12.10.2011**
(21) Anmeldenummer: 09009345.1
(22) Anmeldetag: 17.07.2009
(51) Int. Cl.: A22C 11/02, B65B 9/12, B65B 57/00

(54) **Verpackungsvorrichtung und Verfahren zur Steuerung einer Verpackungsvorrichtung**
Packaging device and method for controlling same
Dispositif d'emballage et procédé de commande d'un dispositif d'emballage

(30) Priorität: 18.07.2008 DE 102008033800
(43) Veröffentlichungstag der Anmeldung: 20.01.2010
(73) Patentinhaber: Poly-clip System GmbH & Co. KG, 60489 Frankfurt am Main (DE)
(72) Erfinder: Freiberger, Gerd, 91275 Auerbach (DE); Schmalfeld, Ralf, 41379 Brüggen (DE)
(74) Vertreter: Eisenführ, Speiser & Partner

(56) Entgegenhaltungen:
- EP-A- 1 763 999
- US-A- 4 813 205
- US-A- 6 117 003

## Beschreibung

Die vorliegende Erfindung betrifft eine Verpackungsvorrichtung, und insbesondere eine Verpackungsvorrichtung, bei der ein Füllgut in eine schlauchförmige Verpackungshülle eingebracht wird sowie ein Verfahren zur Steuerung einer Verpackungsvorrichtung gemäß den Patentansprüchen 1 und 8.

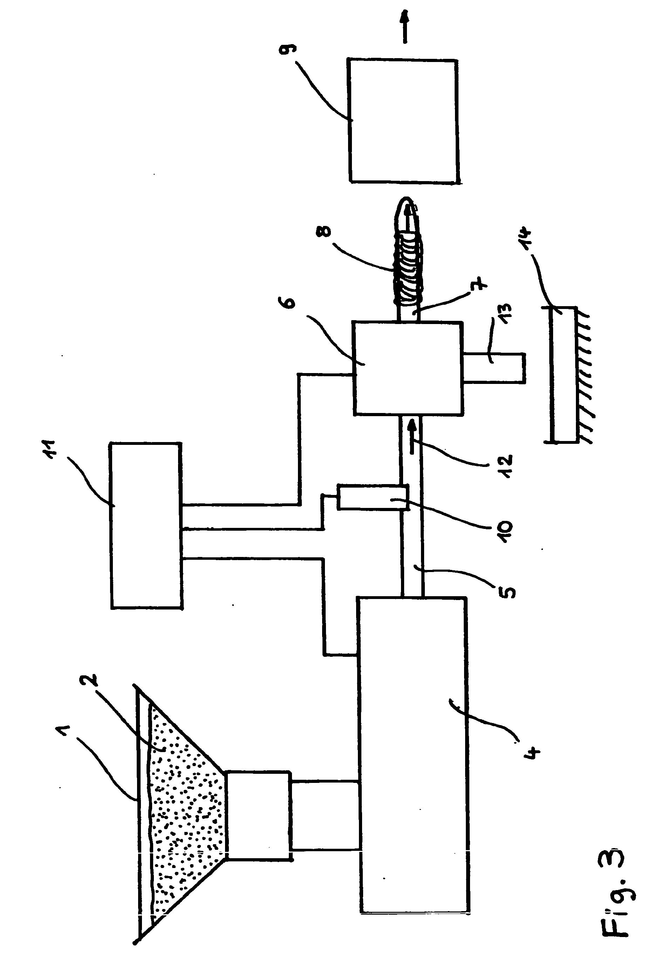

Eine in der Praxis bekannte Verpackungsvorrichtung, bei der ein Füllgut in eine schlauchförmige Verpackungshülle eingebracht wird, ist in Fig. 3 gezeigt. Eine derartige Verpackungsvorrichtung kann beispielsweise zum Herstellen von Würsten verwendet werden.

Die Verpackungsvorrichtung gemäß Fig. 3 umfasst einen meist trichterförmigen Einfüllbehälter oder Vorratsbehälter für das flüssige, pastöse und/oder granulare Füllgut, das beispielsweise ein Brät zur Herstellung von Würsten sein kann. Das Füllgut 2 wird einer Fülleinrichtung 4 zugeführt. Die Fülleinrichtung 4, die auch als Füller bezeichnet wird, bewirkt ein Ausstoßen des Füllguts 2 über ein Verbindungsrohr 5 zu einer Ventileinrichtung 6. An die Ventileinrichtung 6 schließt sich ein Füllrohr 7 an, auf dem eine einseitig mittels eines Verschlusselements verschlossene, schlauchförmige Verpackungshülle 8 angeordnet ist. Die Verpackungshülle 8 ist in einem entsprechenden Vorrat auf zumindest einen Teil des Füllrohrs 7 gefaltet aufgezogen, und das einseitig geschlossene Ende der Verpackungshülle ist über das Ende des Füllrohrs 7 gezogen.

Wird bei dem Betrieb der Verpackungsvorrichtung das Füllgut 2 von dem Vorratsbehälter 1 mittels der Fülleinrichtung 4 gemäß einem vorbestimmten Druck in Richtung des Füllrohrs 7 gefördert, dann wird das Füllgut 2 in die Verpackungshülle 8 eingebracht. Der mit dem Füllgut 2 gefüllte Teil der Verpackungshülle 8 wird zu einer in Strömungsrichtung des Füllguts angeordneten Clipeinrichtung 9 gefördert.

In der Clipeinrichtung 9 erfolgt entsprechend einer zuvor bestimmten Füllmenge (Portionsgröße, Produktgröße) in der Verpackungshülle 8 eine entsprechende Portionierung, indem in einem vorbestimmten Bereich der Verpackungshülle 8 das Füllgut durch (in Fig. 3 nicht gezeigte) Verdrängereinrichtungen verdrängt wird, und in dem entstandenen Verdrängungsbereich in Form eines füllgutfreien Zopfes die Clipeinrichtung 9 zwei voneinander beabstandete (nicht gezeigte) Verschlusselemente, wie beispielsweise Clips, einsetzt, sodass die Verpackungshülle 8 geschlossen wird und der eingeschnürte Teil der Verpackungshülle 8 zwischen den Verschlusselementen durchtrennt werden kann.

Die einzelnen Wurstprodukte werden nach Verlassen der Clipeinrichtung 9 entnommen und zur weiteren Verarbeitung zu den jeweiligen Verarbeitungspositionen gefördert.

Die Verpackungsvorrichtung umfasst des Weiteren eine Sensoreinrichtung 10, die in Form eines Detektors zur Erfassung von Verunreinigungen in dem Füllgut 2 vorgesehen ist. Insbesondere werden unerwünscht in das Füllgut 2 eingebrachte Metallstücke erfasst. Die Sensoreinrichtung 10 gibt ein entsprechendes Erfassungssignal ab, das einer zentralen Steuerungseinrichtung 11 zur weiteren Verarbeitung und Auswertung zugeführt wird.

Bei der Verarbeitung des Füllguts 2, und insbesondere bei dem Mischen und Zerkleinern von Bestandteilen des Füllguts 2 besteht beispielsweise die Möglichkeit, dass Teile der metallischen Werkzeuge zum Zerkleinern der Komponenten des Füllguts 2 beschädigt werden können und abbrechen. Die abgebrochenen Metallteile, beispielsweise Teile aus Leichtmetall, wie Aluminium, oder aus Stahl werden in dem Volumenstrom des Füllguts 2 befördert, wobei die Richtung des Volumenstroms in Fig. 3 durch jeweilige Pfeile 12 im Verbindungsrohr 5 angedeutet ist.

Wird während des Betriebs der Verpackungsvorrichtung das Füllgut 2 beispielsweise durch derartige Metallteile verunreinigt, dann gelangen diese Metallteile in das fertige Produkt (beispielsweise in eine Wurst), sodass dies für den Endverbraucher bei dem Verzehr des Produkts gefährlich werden kann. Derartige Metallteile sind ebenfalls gefährlich im Hinblick darauf, dass beispielsweise das in der Verpackungshülle 8 portioniert abgepackte Produkt in einem weiteren Verarbeitungsvorgang weiterverarbeitet wird. In diesem Fall können zur Weiterverarbeitung vorgesehene Einrichtungen und Maschinen beschädigt werden.

Das fertig verarbeitete und in dem Behälter 1 lagernde Füllgut 2 wird somit durch einen Druck der Fülleinrichtung 4 in dem Verbindungsrohr 5 an der Sensoreinrichtung 10 vorbeigeführt, sodass mittels entsprechender bekannter Messverfahren ein Metallteil erkannt werden kann.

Wird eine metallische Verunreinigung in dem Füllgut 2 durch die Sensoreinrichtung 10 erkannt, dann gibt die Steuerungseinrichtung 11 einen entsprechenden Alarm für den Betreiber der Verpackungsvorrichtung aus und veranlasst ein Stillsetzen der Fülleinrichtung 4, sodass kein weiteres Füllgut 2 unkontrolliert in Richtung der Ventileinrichtung 6 und des Füllrohrs 7 zum Vermeiden des Eindringens der Verunreinigung in das fertige Produkt gefördert wird.

Nach der Erfassung einer metallischen Verunreinigung in dem Füllgut 2 ist es erforderlich, dass manuelle Maßnahmen durch ein Bedienpersonal ergriffen werden. Hierbei kann nach der Erkennung der metallischen Verunreinigung durch die Sensoreinrichtung 10 und dem unmittelbaren Stillsetzen des Betriebs der Fülleinrichtung 4 durch das Bedienpersonal oder automatisch die Ventileinrichtung 6 in der Weise umgestellt werden, dass ein zur Ventileinrichtung 6 gefördertes Füllgut 2 nicht dem Füllrohr 7 sondern einem Ablaufrohr 13 zugeführt wird und manuell die Fülleinrichtung 4 während einer vorbestimmten Zeitdauer betrieben wird, dass mit Sicherheit der mit der metallischen Verunreinigung behaftete Teil des Füllguts 2 über das Ablaufrohr 13 in einen entsprechenden Behälter 14 ausgeschleust wird. Die auszuschleusende Menge an Füllgut 2, d.h. die Menge an Füllgut 2, die nicht dem Füllrohr 7 und damit einer Verarbeitung zu dem Endprodukt zugeführt, sondern in den Behälter 14 abgeleitet wird, hängt dabei von der Füllgeschwindigkeit entsprechend dem von der Fülleinrichtung 4 erzeugten Volumenstrom ab. Im Allgemeinen wird eine relativ große Menge an Füllgut 2 ausgeschleust, um mit Sicherheit die metallische Verunreinigung auszuschleusen.

Das Ausschleusen des vermutlich die metallische Verunreinigung enthaltenden Füllguts 2 wird somit einerseits zeitabhängig entsprechend einer einstellbaren Zeit in Verbindung mit dem vorgegebenen Volumenstrom der Fülleinrichtung 4 ausgeschleust, oder es kann ein Ausschleusen derart vorgenommen werden, dass die Ausschleusmenge einer an der Fülleinrichtung 4 einzustellenden Anzahl von Portionen (voreingestellte Produktmenge) entspricht.

Es besteht ferner die Möglichkeit, keine direkte Ausschleusung nach der Erkennung einer metallischen Verunreinigung durch die Sensoreinrichtung 10 vorzunehmen, sondern auf manuelle Weise das Verbindungsrohr 5 und die Ventileinrichtung 6 zu reinigen. Hierzu ist die Vorrichtung teilweise manuell zu zerlegen und wieder zusammenzusetzen. Ferner ist es erforderlich, nach der zeitweiligen Unterbrechung des gesamten Betriebs der Portionierungs- und Verpackungsvorrichtung diese wieder in Betrieb zu setzen.

Eine derartige Handhabung ist jedoch sehr umständlich und zeitaufwendig und führt zu einem unerwünschten und langen Stillstand der Vorrichtung. Des Weiteren sind manuelle Eingriffe erforderlich, wobei das Zerlegen und erneute Zusammensetzung der Vorrichtung oder zumindest von Teilen derselben für das Bedienpersonal gefährlich sein kann.

Das Ausschleusen eines Teils des Füllguts 2 nach der Erfassung einer metallischen Verunreinigung bedeutet einen erhöhten Verlust an Füllgut, da zur Sicherstellung, dass in jedem Fall das verunreinigte Füllgut ausgeschleust wird, eine größere Füllgutmenge ausgeschleust werden muss. Somit kommt neben der längeren Zeitdauer, während der der Betrieb der Vorrichtung unterbrochen ist, auch der Verlust an erheblichen Mengen von Füllgut 2 hinzu.

Das US-Patent 6,117,003 offenbart eine Wurstverpackungsmaschine oder Clipmaschine mit einem an dem Füllrohr angeordneten Metalldetektor. Die Clipmaschine umfasst eine Pumpvorrichtung, welche eine Füllmasse durch ein Füllrohr in eine einseitig verschlossene Verpackungshülle fördert, die auf das Füllrohr aufgezogen ist. Die gefüllte Verpackungshülle wird in an sich bekannter Weise mittels Verschließmitteln, wie Clips, verschlossen. Das Füllrohr ist in seinem hinteren Abschnitt aus Kunststoff gebildet und weist außerdem in diesem Bereich einen Metalldetektor zum Erkennen metallischer Verunreinigungen in der Füllmasse auf. Wird eine metallische Verunreinigung in der Füllmasse 15 detektiert, bewirkt eine Steuereinrichtung den Auswurf des verunreinigten Wurstprodukts über eine Auswurfeinrichtung. Hierbei ist der Verlust an Füllgut, da ein komplettes Wurstprodukt aussortiert wird, höher, als es aufgrund der Verunreinigung notwendig wäre.

Das EP-Patent 1 763 999 offenbart eine Portionier- und Verpackungsvorrichtung mit einem an einer Fördereinrichtung angeschlossenen Füllrohr. Auf dem Füllrohr befindet sich eine hierauf aufgezogene Verpackungshülle. Ein parallel zu dem Füllrohr hin- und herbeweglicher Bremsring ist eingerichtet, auf dem Füllrohr entgegen der Abzugsrichtung in eine Freigabestellung zum Freigeben eines Verpackungsvolumens zurückzufahren. Hierzu wird beim Einschnüren und Verschließen das im Einschnürbereich befindliche Füllgut in das freigegebene Verpackungsvolumen verdrängt und nach dem Verschließen wieder in die abgezogene Verpackungshülle abgestreift. Ein Metalldetektor ist hier nicht vorgesehen, weshalb metallische Verunreinigungen nicht detektiert werden können.

Der vorliegenden Erfindung liegt daher die Aufgabe zugrunde, eine Verpackungsvorrichtung der eingangs genannten Art derart auszugestalten, dass eine sichere Erfassung einer metallischen Verunreinigung gewährleistet ist, während ein größerer Verlust an Füllgut und längere Zeiten der Betriebsunterbrechung der Vorrichtung vermieden werden.

Erfindungsgemäß wird diese Aufgabe gelöst durch eine Verpackungsvorrichtung gemäß den im Patentanspruch 1 angegebenen Merkmalen, und durch ein Verfahren zur Steuerung der Verpackungsvorrichtung gemäß den im Patentanspruch 7 angegebenen Merkmalen. In den sich jeweils daran anschließenden Unteransprüchen 2 bis 6 bzw. 8 bis 13 sind vorteilhafte Ausgestaltungen angegeben.

Die Erfindung betrifft somit eine Verpackungsvorrichtung mit einer Fülleinrichtung zur Förderung eines Füllguts, einem an die Fülleinrichtung angeschlossenen Füllrohr zum Einleiten des durch die Fülleinrichtung zugeführten Füllguts in eine schlauchförmige Verpackungshülle und Ausgeben des gebildeten Produkts, einer in der Förderrichtung der Fülleinrichtung angeordneten Clipeinrichtung zum Einschnüren der Verpackungshülle an einer vorbestimmten Position und Verschließen der Verpackungshülle mit zumindest einem Verschlusselement, einer zwischen der Fülleinrichtung und dem Füllrohr angeordneten Sensoreinrichtung zur Erfassung von Verunreinigungen in dem Füllgut und Ausgeben eines Erfassungssignal an einer Steuerungseinrichtung, wobei die Steuerungseinrichtung eine Steuerungsverbindung mit der Clipeinrichtung aufweist.

Auf diese Weise ist gewährleistet, dass eine insbesondere metallische Verunreinigung in dem Füllgut verlässlich erfasst werden kann. Der Volumenstrom des Füllguts passiert die Sensoreinrichtung und der Steuerungseinrichtung wird ein entsprechendes Erfassungssignal zugeführt. Die Steuerungseinrichtung steuert ebenfalls den Betrieb der Clipeinrichtung. Hierzu ist erfindungsgemäß eine Daten- bzw. Steuerungsverbindung zwischen der Steuerungseinrichtung und der Clipeinrichtung vorgesehen, so dass die Clipeinrichtung mittels der Steuerungseinrichtung insbesondere betriebsabhängig gesteuert werden kann.

Die Steuerungseinrichtung kann ferner bei Ausbleiben des Erfassungssignals die Clipeinrichtung ansteuern zur Bildung eines Produkts mit einer vorbestimmten Produktgröße, und bei Vorliegen des Erfassungssignals die Clipeinrichtung ansteuern zur Erzeugung einer Produktgröße, die größer oder kleiner ist als die vorbestimmte Produktgröße.

Es kann somit in Abhängigkeit von der Ausgabe des Erfassungssignals der Sensoreinrichtung der Clipeinrichtung ein Signal zugeführt werden, dass die Clipeinrichtung einen vorbestimmten Betriebsmodus mit einem entsprechend definierten Betriebsverhalten einnimmt. Der spezielle Betriebsmodus der Clipeinrichtung, der durch die Steuerungseinrichtung in Abhängigkeit von der Erfassung der Verunreinigung eingestellt wird, dient dazu, eine bestimmte Produktmenge in besonderer Weise zu kennzeichnen, dass sie sich von Anordnung und Aussehen des im normalen störungsfreien Betrieb sich ergebenden Produkts sicher unterscheidet. Das durch das geänderte Betriebsverhalten infolge der Ansteuerung durch die Steuerungseinrichtung geänderte Produkt kann als das Produkt identifiziert werden, indem sicher die Verunreinigung angeordnet ist, sodass im Rahmen einer üblichen Produktweiterverarbeitung und insbesondere eines normalen und störungsfreien Produktdurchlaufs der kontaminierte Bereich des Füllguts nicht unter teilweise erheblichen Verlusten und Produktionsausfällen ausgeschleust, sondern in genau definierter vorbestimmter Weise durch die Vorrichtung durchgeschleust wird. Somit bewirkt die erfassungsabhängige gezielle Ansteuerung der Clipeinrichtung zum Eintreten in einen bestimmten Betriebszustand oder Betriebsmodus eine Änderung der Gestalt und Anordnung des Produkts, sodass ein mit sehr hoher Wahrscheinlichkeit mit der metallischen Verunreinigung behafteter Bereich des Produkts von den unbelasteten Produkten unterschieden werden kann.

Mit der erfindungsgemäßen Vorrichtung ist es somit möglich, eine metallische Verunreinigung sicher zu erfassen und ohne eine Unterbrechung des Produktionsablaufs, d.h. des Gesamtbetriebs der Vorrichtung einen Teil des Produkts derart zu kennzeichnen, dass die Verunreinigung diesen gekennzeichneten Teil des Produkts eindeutig zugeordnet werden kann. Der Einsatz weiterer Einrichtungen und Verfahren zur besonderen Kennzeichnung ist nicht erforderlich.

Die Steuerungseinrichtung kann während des Betriebs der Fülleinrichtung die Clipeinrichtung bei Vorliegen des Erfassungssignals der Sensoreinrichtung zur Unterbrechung ihres Betriebs in vorbestimmter Weise ansteuern.

Die Unterbrechung des Betriebs der Clipeinrichtung umfasst das Unterbrechen zumindest einer Funktion des Portionierens, des Verschließens mittels eines Verschlusselements und des Durchführens eines Trennschnitts zur Bildung der vorbestimmten Produktgröße.

Die Steuerungseinrichtung kann die Clipeinrichtung zur Unterbrechung ihres Betriebs während einer vorbestimmten Zeitdauer ansteuern, die größer ist als die Zeitdauer zur Bildung der vorbestimmten Produktgröße.

Die Steuerungseinrichtung kann die Clipeinrichtung zur Unterbrechung ihres Betriebs während des Betriebs der Fülleinrichtung zur Bildung einer vorbestimmten Anzahl der vorbestimmten Produktgröße ansteuern.

Die Vorrichtung kann ferner eine Ventileinrichtung aufweisen, die zwischen der Sensoreinrichtung und dem Füllrohr angeordnet und vorgesehen ist, in Abhängigkeit von einer Steuerung durch die Steuerungseinrichtung das von der Fülleinrichtung bereitgestellte Füllgut entweder zu dem Füllrohr zur Bildung des Produkts oder zu einem an der Ventileinrichtung angeordneten Ablaufrohr zum Ausschleusen des Füllguts zu leiten.

Die Vorrichtung kann des Weiteren eine zwischen der Fülleinrichtung und der Sensoreinrichtung angeordnete verschließbare Öffnung zum Zuführen vorbestimmter Prüfelemente zur Prüfung der Funktion der Sensoreinrichtung aufweisen.

Die vorliegende Erfindung betrifft ebenfalls ein Verfahren zur Steuerung einer Verpackungsvorrichtung, mit den Schritten: Fördern eines Füllguts in einem Volumenstrom durch ein Füllrohr in eine schlauchförmige Verpackungshülle und Ausgeben des in der Verpackungshülle befindlichen Füllguts, Einschnüren der gefüllten Verpackungshülle an einer vorbestimmten Position und Verschließen der Verpackungshülle mit zumindest einem Verschlusselement zur Bildung eines Produkts mit einer vorbestimmten Produktgröße, Erfassen einer Verunreinigung in dem Füllgut und Ausgeben eines Erfassungssignals an einer Steuerungseinrichtung, und Bilden einer Steuerungsverbindung zwischen der Steuerungseinrichtung und der Clipeinrichtung zur Ansteuerung der Clipeinrichtung.

Das Verfahren kann ferner den Schritt des Ansteuerns der Clipeinrichtung in Abhängigkeit von der Ausgabe des Erfassungssignals in vorbestimmter Weise zur Bildung einer Produktgröße, die größer oder kleiner ist als die vorbestimmte Produktgröße umfassen.

Das Verfahren kann ferner den Schritt des Ansteuerns der Clipeinrichtung während des Betriebs der Fülleinrichtung bei Vorliegen des Erfassungssignals zur Unterbrechung des Betriebs der Clipeinrichtung umfassen.

Die Unterbrechung des Betriebs der Clipeinrichtung kann das Unterbrechen zumindest eine Funktion des Portionierens, des Verschließens mittels des Verschlusselements und des Durchführens eines Trennschnitts zur Bildung der vorbestimmten Produktgröße umfassen.

Das Verfahren kann ferner den Schritt des Ansteuerns der Clipeinrichtung zur Unterbrechung ihres Betriebs während einer vorbestimmten Zeitdauer, die größer ist als die Zeitdauer zur Bildung der vorbestimmten Produktgröße umfassen.

Das Verfahren kann ferner den Schritt des Ansteuerns der Clipeinrichtung zur Unterbrechung ihres Betriebs während des Betriebs der Fülleinrichtung zur Bildung einer vorbestimmten Anzahl der vorbestimmten Produktgröße umfassen.

Das Verfahren kann ferner den Schritt der Unterdrückung des Betriebs der Fülleinrichtung, Ausgeben eines Warnsignals und Stillsetzen der Vorrichtung umfassen.

Das Verfahren kann ferner den Schritt des Beendens des Betriebs der Fülleinrichtung bei dem Vorliegen des Erfassungssignals mit einer einstellbaren Zeitverzögerung bis zur tatsächlichen Beendigung des Betriebs der Fülleinrichtung umfassen.

Das Verfahren kann ferner den Schritt des Einsetzens von Prüfelementen in den Volumenstrom und Prüfen der Erfassung des Testelements mittels der Sensoreinrichtung umfassen.

Die vorliegende Erfindung wird nachstehend anhand von Ausführungsbeispielen unter Bezugnahme auf die Figuren im Einzelnen beschrieben. Es zeigen:
Fig. 1 eine Gesamtdarstellung der Verpackungsvorrichtung gemäß einem Ausführungsbeispiel der vorliegenden Erfindung,
Fig. 2 ein Teil der in Fig. 1 dargestellten Verpackungsvorrichtung gemäß einem zweiten Ausführungsbeispiel der vorliegenden Erfindung, und
Fig. 3 eine schematische Darstellung einer Verpackungsvorrichtung gemäß dem Stand der Technik.

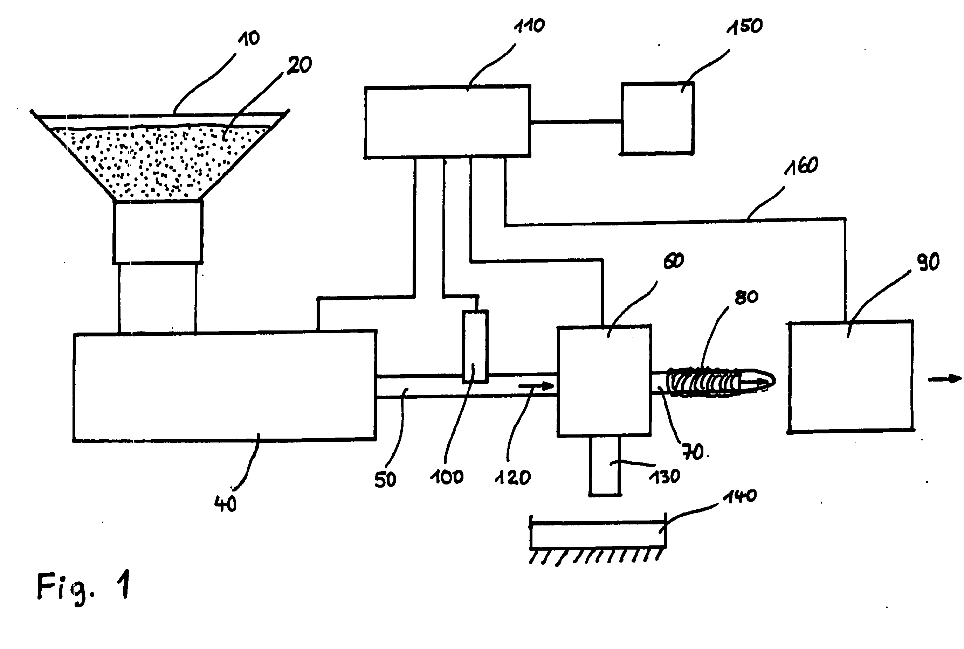

Fig. 1 zeigt eine schematische Darstellung der Anordnung einer Verpackungsvorrichtung gemäß der vorliegenden Erfindung.

Gemäß Fig. 1 wird ein in einem Behälter 10 befindliches Füllgut 20 einer Fülleinrichtung 40 zugeführt, die ihrerseits mit einem vorbestimmten Druck einen Volumenstrom erzeugt, der über ein Verbindungsrohr 50 das Füllgut 20 einer Ventileinrichtung 60 zuführt. Mittels eines an der Ventileinrichtung 60 angeordneten Füllrohrs 70, auf dem eine vorbestimmte Menge einer Verpackungshülle 80 zur Verpackung des Füllguts 20 angeordnet ist, wird die an einer bestimmten Stelle einseitig geschlossene Verpackungshülle 80 mit dem Füllgut 20 gefüllt. Die gefüllte Verpackungshülle 80 wird einer in der Bewegungsrichtung der gefüllten Verpackungshülle 80 angeordneten Clipeinrichtung 90 zugeführt, in welcher in der vorstehend in Verbindung mit Fig. 3 beschriebenen Weise das Portionieren durch entsprechende Verdrängereinrichtungen erfolgt, wobei eine vorbestimmte Menge des Füllguts 20 in der Verpackungshülle 80 angeordnet und durch die Verdrängereinrichtungen derart portioniert wird, dass zwischen den Portionen eine Einschnürung bzw. ein füllgutfreier Zopfabschnitt der Verpackungshülle 80 erzielt wird. Im Bereich der füllgutfreien Zopfabschnitte der Verpackungshülle 80 erfolg durch die Clipeinrichtung 90 ein beidseitiges Verschließen der in der Verpackungshülle 80 portionierten Menge des Füllguts 20, indem Verschlusselemente bzw. Clips an der Verpackungshülle 80 befestigt werden, und es erfolgt danach durch die Clipeinrichtung 90 ein Zerschneiden der einzelnen Produktteile im eingeschnürten Bereich zwischen den Verschlusselementen. Eine vorbestimmte Produktgröße entsprechend der eingestellten Portionsgröße (Füllgutmenge) wird erreicht.

In gleicher Weise wie es in Verbindung mit Fig. 1 beschrieben wurde, erfolgt eine Überwachung des Füllguts 20 mittels einer Sensoreinrichtung 100, wobei insbesondere in dem Füllgut 20 in unerwünschter Weise enthaltene metallische Gegenstände (Metallteile) erfasst werden können.

Entsprechende Ausgangssignale der Sensoreinrichtung 100 bzw. des Metalldetektors werden einer zentralen Steuerungseinrichtung 110 zugeführt, sodass auf der Basis der Erfassungssignale der Sensoreinrichtung 100 nach einer entsprechenden Verarbeitung durch die Steuerungseinrichtung 110 entsprechende Vorgänge ausgelöst werden können. Die Steuerungseinrichtung 110 kann auch Bestandteil der Clipeinrichtung 90 sein.

Wird eine Verunreinigung in dem Füllgut 20 nach dem Passieren des Volumenstroms entsprechend der angegebenen Richtung (Pfeile 120) in dem Verbindungsrohr 50 erfasst, dann kann in gleicher Weise wie beim Stand der Technik eine entsprechende Menge an Füllgut durch ein entsprechendes Umstellen der Ventileinrichtung 60 ausgeschleust werden. Hierbei wird die auszuschleusende Menge an Füllgut 20 mittels eines Ablaufrohrs 130 in einen Behälter 140 eingeleitet.

Zur Steuerung vorbestimmter Maßnahmen und insbesondere der gesamten Verpackungsvorrichtung ist die Steuerungseinrichtung 110 mit einem Anzeige- und Bedienfeld 150 verbunden. Auf diesem Anzeige- und Bedienfeld 150 können für den Benutzer der Vorrichtung Betriebszustände und eingestellte Betriebsbedingungen angezeigt werden, und es kann ferner der Benutzer über entsprechende Eingabe tasten oder eine Menüsteuerung die Vorrichtung manuell, halbautomatisch oder automatisch mit Vorgabe entsprechender Betriebsparameter steuern. Betriebsparameter können auch in einer Speichereinrichtung in der Steuerungseinrichtung 110 gespeichert werden, insbesondere zu der Erfassung durch die Sensoreinrichtung 100.

Im Vergleich zu der Anordnung gemäß Fig. 3 umfasst die Anordnung der erfindungsgemäßen Vorrichtung gemäß Fig. 1 eine Datenverbindung oder Steuerungsverbindung 160 zwischen der Steuerungseinrichtung 110 und der Clipeinrichtung 90. Mittels dieser Steuerungsverbindung 160, die drahtgebunden oder drahtlos ausgeführt sein kann, können seitens der Steuerungseinrichtung 110 Befehle für einen bestimmten Betrieb der Clipeinrichtung 90 zugeführt werden, und es können von der Clipeinrichtung 90 zur Steuerungseinrichtung 110 Daten übertragen werden, die den Betrieb der Clipeinrichtung 90 sowie insbesondere eingestellte Parameter und Betriebsbedingungen bezeichnen. Die Clipeinrichtung 90 weist somit eine Schnittstelle zur Steuerungseinrichtung 110 auf.

Die erfindungsgemäße Vorrichtung gemäß Fig. 1 ist somit in der Lage, die Funktionen auszuführen und Betriebszustände anzunehmen, wie sie in Verbindung mit Fig. 3 bezüglich des Standes der Technik beschrieben wurden. Dies betrifft insbesondere das Ausschleusen einer Menge an Füllgut 20, falls mittels der Sensoreinrichtung 100 eine metallische Verunreinigung ermittelt wird. Die Steuerungseinrichtung 110 kann somit entsprechend der vorliegenden und eingestellten Betriebsbedingungen eine Menge über eine Umstellung der Ventileinrichtung 60 in den Behälter 140 ausschleusen.

Die erfindungsgemäße Vorrichtung ist somit in der Lage, neben der zeitabhängigen Ausschleusung, bei der nach Erfassen einer metallischen Verunreinigung das Produkt während einer einstellbaren Zeit mittels der Ventileinrichtung 60 ausgeschleust wird, und einer portionsabhängigen Ausschleusung, bei der nach Erfassung einer metallischen Verunreinigung das Produkt eine Anzahl von an der Fülleinrichtung 40 einstellbaren Portionen ausgeschleust wird, weitere Betriebsmodi anzunehmen. Im Einzelnen steuert die Steuerungseinrichtung 110 die gesamte Vorrichtung zur Bereitstellung der zusätzlichen Betriebsmodi.

Die Steuerungseinrichtung 110 ist in Fig. 1 getrennt von einer der Komponenten der Vorrichtung gezeigt. Vorzugsweise ist die Steuerungseinrichtung 110, wie bereits vorstehend angegeben, in der Clipeinrichtung 90 angeordnet, so dass bei dem Bedienen der Clipeinrichtung 90 auch über die Steuerungseinrichtung 110 die gesamte Vorrichtung gesteuert werden kann. Insbesondere kann dann die Ventileinrichtung 60 zum Ausschleusen von Füllgut von der Clipeinrichtung 90 (bzw. der darin angeordneten Steuerungseinrichtung 110) gesteuert werden.

Im Einzelnen wird nach Erfassen einer metallischen Verunreinigung in dem Füllgut 20 durch die Sensoreinrichtung 100 ein Signal an die Steuerungseinrichtung 110 gegeben, worauf die Steuerungseinrichtung 110 in Abhängigkeit von der Ausgabe dieses Erfassungssignals insbesondere die Clipeinrichtung 90 in vorbestimmter Weise entsprechend zumindest einem der weiteren Betriebsmodi ansteuert.

Die Möglichkeiten des zeitabhängigen Ausschleusens oder portionsabhängigen Ausschleusens bezeichnen einen ersten Betriebsmodus.

Gemäß einem zweiten Betriebsmodus erfolgt kein Ausschleusen durch eine Verstellung der Ventileinrichtung 60, sondern ein Durchschleusen auch des eine metallische Verunreinigung aufweisenden Füllguts 20. Entsprechend einer ersten Möglichkeit des zweiten Betriebsmodus erfolgt ein zeitabhängiges Durchschleusen, wobei das Füllgut 20 während einer einstellbaren Zeit weitergefüllt wird. In diesem Zusammenhang wird die Fülleinrichtung 40 derart angesteuert, dass zeitabhängig eine entsprechende Menge des Füllguts 20 in die Verpackungshülle 80 mittels des Füllrohrs 70 eingefüllt werden kann. Während dieser Zeitdauer des Durchschleusens wird die Clipeinrichtung 90 in der Weise von der Steuerungseinrichtung 110 angesteuert, dass das Erzeugen eines füllgutfreien Zopfabschnitts, das Verschließen des Produkts mittels entsprechender Verschlusselemente und das Zerschneiden des Produkts im eingeschnürten Bereich der Verpackungshülle 80 zwischen den dort angeordneten Verschlusselementen unterdrückt wird. Die Clipeinrichtung 90 erhält während dieser vorbestimmten Zeitdauer kein Clipsignal, sodass die Funktionen unterdrückt werden.

Es entsteht durch die Unterdrückung dieser Funktionen der Clipeinrichtung 90 und dem weiteren Betrieb der Fülleinrichtung 40 ein Produkt mit einer größeren Menge als der voreingestellten Portionierungsmenge, sodass beispielsweise eine längere Wurst entseht, in der sich das Füllgut 20 mit dem erfassten Metallteil befindet, wobei dieses längere und damit eindeutig identifizierbare Produkt leicht aussortiert werden kann. Es besteht alternativ die Möglichkeit, ein Produkt mit einer kleineren Menge als der voreingestellten Portionierungsmenge zu bilden, sodass beispielsweise eine kürzere Wurst entseht, in der sich das Füllgut 20 mit dem erfassten Metallteil befindet, wobei dieses kürzere und damit eindeutig identifizierbare Produkt leicht aussortiert werden kann (zeitabhängig).

Das auszusortierende Produkt ist somit durch die größere oder auch kleinere Länge und die größere oder kleinere Portionierungsmenge infolge der zeitweiligen Unterdrückung des Betriebs der Clipmaschine 90 gekennzeichnet. Die Produktgröße ist daher größer oder kleiner als eine vorbestimmte Produktgröße, die einem Produkt mit der voreingestellten Portionierung entspricht.

In einer weiteren Möglichkeit innerhalb des zweiten Betriebsmodus kann eine portionsabhängige Durchschleusung durchgeführt werden, und es wird kein Füllgut 20 über die Ventileinrichtung 60 und das Ablaufsrohr 130 ausgeschleust. Vielmehr erfolgt eine Durchschleusung auch des mit dem erfassten Metallteil verunreinigten Füllguts 20, wobei eine voreingestellte (vorbestimmte) Anzahl von Portionen des Produkts entsprechend der voreingestellten Portionsgröße (Portionierungsmenge, vorbestimmte Produktgröße) gebildet wird. Somit wird nach dem Erfassen der metallischen Verunreinigung die Füllung der Verpackungshülle 80 in der voreingestellten Weise fortgesetzt.

Während dieser portionsabhängigen Durchschleusung wird jedoch die Clipeinrichtung 90 nach der Zuführung des Erfassungssignals der Sensoreinrichtung 10 durch die Steuerungseinrichtung 110 in einer vorbestimmten Weise angesteuert, um eine Produktgröße zu erreichen, die größer als die vorbestimmte Produktgröße (Einzelportion) ist. Diese Ansteuerung bewirkt, dass durch die Clipeinrichtung 90 das Produkt in der üblichen Weise portioniert wird und damit bei der Verpackungshülle 80 Einschnürungen gebildet werden. Es wird jedoch die Clipeinrichtung 90 derart angesteuert, dass sowohl das Anbringen der Verschlusselemente in dem eingeschnürten Bereich als auch das Zerschneiden des Produkts im eingeschnürten Bereich (das Anbringen von Trennschnitten) unterdrückt wird.

Es entsteht somit ein längeres Produkt (das länger als die vorbestimmte Produktgröße ist), beispielsweise eine längere Wurst in der Länge der vorbestimmten Anzahl der Portionen, wobei jedoch keine Verschlusselemente und keine Trennschnitte vorgesehen sind. Auf diese Weise wird ebenfalls das Füllgut 20, das die metallische Verunreinigung enthält, in der üblichen Weise in die Verpackungshülle 80 eingefüllt, wobei jedoch die vorbestimmte Anzahl der Portionen (Einzelportion), von denen eine die Verunreinigung enthält, durch die Unterdrückung des Verschließens und des Zerschneidens im Vergleich zu dem fehlerfreien Produkt gekennzeichnet ist.

In den beiden vorstehend beschriebenen Fällen des zweiten Betriebsmodus kann die vorbestimmte Zeit die zeitabhängige Durchschleusung oder kann die Anzahl der Portionen bei der portionsabhängigen Durchschleusung in Abhängigkeit von dem durch die Fülleinrichtung 40 erzeugten Volumenstrom bestimmt werden. Entsprechend den Dimensionen und Betriebsparametern der Vorrichtung können diese weiteren Parameter für die Durchschleusung eingestellt werden. In jedem Fall erfolgt zu Beginn und am Ende der zeitweiligen Unterdrückung des Betriebs der Clipeinrichtung 90 ein Verschließen und Zerschneiden des längeren Produkts, sodass dieses von den übrigen unverschmutzten Produkten erkannt und getrennt werden kann.

Es ist auf diese Weise möglich, ohne eine Unterbrechung des Betriebs der gesamten Vorrichtung das verschmutzte Produkt durchzuschleusen und Produktteile, die die Verschmutzung enthalten, durch entsprechendes Ansteuern der Clipeinrichtung 90 zu kennzeichnen, sodass ein Aussortieren ohne weiteres möglich ist.

Der Betrieb der Verpackungsvorrichtung umfasst einen dritten Betriebsmodus, bei dem eine Durchschleusung mit einer Füllunterdrückung und Ausgabe eines Warnsignals durchgeführt wird. Nach der Erfassung einer metallischen Verunreinigung mittels der Sensoreinrichtung 100 wird die Verpackungsvorrichtung mittels der Steuerungseinrichtung 110 angehalten, wobei die Fülleinrichtung 40 und die Clipeinrichtung 90 angehalten werden. Für das Bedienpersonal wird ein Warnsignal ausgegeben. Das Bedienpersonal bedient daraufhin manuell die Clipeinrichtung 90 und setzt ein erstes Verschlusselement (Clip) an eine vorbestimmte Stelle der Verpackungshülle 80. Danach wird die Fülleinrichtung 40 gestartet, und es wird durch die Fülleinrichtung 40 erneut ein Volumenstrom in Richtung der Pfeile 120 gemäß Fig. 1 gebildet (Auto-Ein). Während einer vorbestimmten (einstellbar) zur Zeitdauer wird eine Portion in die Verpackungshülle 80 gefüllt, und es erfolgt anschließend ein weiteres Stillsetzen der Fülleinrichtung 40. Das Bedienpersonal setzt somit durch eine manuelle Bedienung der Clipeinrichtung 90 das erste Verschlusselement, sodass in vorbestimmter Weise durch einen manuellen Eingriff des Bedienpersonal ein bezeichnetes Produkt gebildet wird, das nach Einbringen eines entsprechenden Trennschnitt durch die Clipeinrichtung 90 aussortiert werden kann. Dieses Produkt enthält infolge des unmittelbaren Stillsetzens der Vorrichtung nach der Erfassung der metallischen Verunreinigung dieses Metallteil. Nach dem Aussortieren des auf diese Weise bezeichneten Produkts kann das Bedienpersonal die Verpackungsvorrichtung einschalten und für die weitere automatische Produktion erneut in Betrieb nehmen (Auto-Ein).

Auf diese Weise ist es möglich, eine sehr kleine Verlustmenge an Füllgut 20 durchzuschleusen und nachträglich auszusortieren. Bei diesem manuellen Eingriff durch das Bedienpersonal wird somit eine vorbestimmte Portion in die Verpackungshülle 80 gefüllt, wobei die Clipeinrichtung 90 zum Anbringen der Verschlusselemente und der Trennschnitte manuell bedient wird.

Bei dem vierten Betriebsmodus der Verpackungsvorrichtung wird eine portionsabhängige Durchschleusung nach der Erfassung einer metallischen Verunreinigung durchgeführt, wobei die Füllung unterdrückt wird, ein Warnsignal ausgegeben wird und die Vorrichtung stillgesetzt wird. Ein Bedienungspersonal setzt unter manueller Bedienung der Clipeinrichtung 90 ein erstes Verschlusselement (Clip) an die Verpackungshülle 80 bei dem Füllrohr 70, worauf die Fülleinrichtung 40 gestartet wird (Auto-Ein). Es erfolgt ein normaler Füllvorgang durch den Betrieb der Fülleinrichtung 40, wobei eine vorbestimmte einstellbare Anzahl von Portionen abgefüllt wird, bis danach ein weiteres Stillsetzten der Fülleinrichtung 40 erfolgt. Es wird ein somit erstes Verschlusselement (Clip) eingesetzt, und nach einem Aussortieren des Produkts (beispielsweise der Wurst) entsprechend der vorbestimmten Anzahl von Portionen wird die weitere Produktion durch das übliche automatische Verfahren (Auto-Ein) erneut eingestellt.

Gemäß einem fünften Betriebsmodus erfolgt ausgehend von dem automatischen störungsfreien Betrieb der Verpackungsvorrichtung bei dem Erkennen einer metallischen Verunreinigung in dem Füllgut 20 mittels der Sensoreinrichtung 100 ein Stillsetzen der Fülleinrichtung 40 mit einer einstellbaren Zeitverzögerung in Verbindung mit einem bekannten Weg und einer bekannten Geschwindigkeit. Dies führt dazu, dass nicht unmittelbar die Fülleinrichtung 40 angehalten wird, sondern der Füllvorgang während der einstellbaren Zeitverzögerung fortgesetzt wird, sodass die Stelle mit der Verunreinigung (der Ort, an dem sich im Füllgut 20 die metallische Verunreinigung befindet) in Verbindung mit dem weitergehenden Volumenstrom in die Nähe der Ausschleusstelle in der Ventileinrichtung 60 oder auch an das Ende des Füllrohrs 70 beim Durchschleusen gebracht werden kann. Auf diese Weise kann die Menge an Füllgutverlust vermindert werden, da bei einem Ausschleusen die Verunreinigung sich unmittelbar in der Nähe der Ventileinrichtung 60 und vorzugsweise in der Ventileinrichtung 60 befindet und somit eine kleinere Ausschleusmenge erforderlich ist, um die Verunreinigung auszuschleusen. Des Weiteren ist im Falles des Durchschleusens bereits die Verunreinigung am Ende des Füllrohrs 70 angeordnet, sodass unmittelbar mit der nächsten Portion eine einer Portion entsprechende Menge an Füllgut 20 in normaler Weise in die Verpackungshülle 80 eingebracht werden kann.

Der vorstehend beschribene fünfte Betriebsmodus kann mit den vorstehend beschriebenen Betriebsmodi kombiniert werden, da sowohl das Ausschleusen als auch das Durchschleusen in Abhängigkeit von der Zeit als auch in Abhängigkeit von einer vorbestimmten Anzahl von Portionen durchgeführt werden kann.

Gemäß einem sechsten Betriebsmodus der erfindungsgemäßen Verpackungsvorrichtung erfolgt nach einer Ausschleusung ein kurzeitiges Anhalten der Fülleinrichtung (Füllerstop), sodass die Ventileinrichtung 60 drucklos umgeschaltet werden kann. Dies betrifft insbesondere die vorzugsweise Ausgestaltung der Ventileinrichtung 60 mit einem Kugelventil, sodass dies drucklos verstellt werden kann. Dies verhindert auch, dass in bestimmten Situationen nach einem erneuten Anlaufen der Verpackungsvorrichtung ein weiteres Füllen gegen die geschlossenen Verdrängereinrichtungen der Clipeinrichtung 90 erfolgt. Es wird hierdurch ein langsameres Anfahren der Vorrichtung erreicht, wobei das Füllgut 20 und die Verpackungshülle 80 geschont werden.

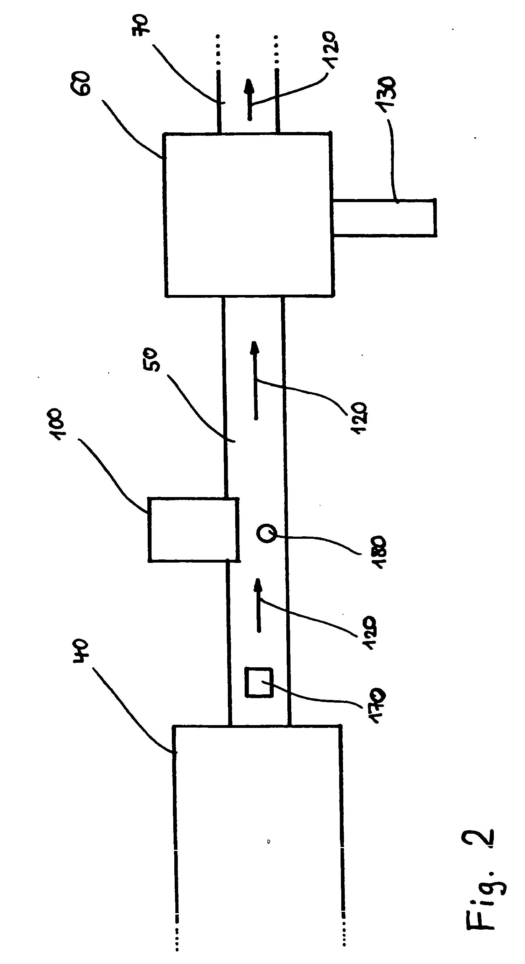

Unter Bezugnahme auf Fig. 2 wird nachstehend ein zweites Ausführungsbeispiel der vorliegenden Erfindung beschrieben.

Die Fig. 2 zeigt in schematischer Darstellung einen Teil der Anordnung von Fig. 1, wobei die Fülleinrichtung 40, das Verbindungsrohr 50, die Ventileinrichtung 60 mit dem daran angeordneten Füllrohr 70 und dem Ablaufrohr 130 sowie dem in dem Verbindungsrohr 50 angeordneten Sensor 100 gezeigt sind. Pfeile 120 bezeichnet die Steuerungseinrichtung des Volumenstroms des Füllguts 20 (Fig. 1), das mittels der Fülleinrichtung 40 gefördert wird. Die Datenverbindungen zwischen den vorstehend angegebenen Komponenten und der Steuerungseinrichtung 110 sind zur Vereinfachung der Darstellung nicht gezeigt.

Die Sensoreinrichtung 100 gemäß Fig. 2 dient in gleicher Weise wie die Sensoreinrichtung 100 gemäß Fig. 1 die Erfassung von Verunreinigungen, und insbesondere von metallischen Verunreinigungen. Im Falle der Erfassung einer metallischen Verunreinigung gibt die Sensoreinrichtung 100 ein entsprechendes Erfassungssignal an die Steuerungseinrichtung 110 ab.

Eine sichere Erfassung einer Verunreinigung in dem Füllgut 20 ist somit nur bei einer ungestörten Wirkungsweise der Sensoreinrichtung 100 gewährleistet. Zur Sicherstellung der Funktionsfähigkeit der Sensoreinrichtung 100 muss daher eine Funktionsprüfung der Sensoreinrichtung 100 durchgeführt werden. Gemäß einem bekannten Verfahren werden metallische oder Metallteile enthaltende Teststäbe verwendet, wobei jedoch lediglich die reine Erfassungsfunktion der Sensoreinrichtung 100 erfasst werden kann. Eine Bestätigung, dass die Sensoreinrichtung 100 in zuverlässiger Weise metallische Verunreinigung erfassen kann, erlaubt jedoch keine verlässliche Aussage darüber, ob tatsächlich eine erfasste metallische Verunreinigung auch ausgeschieden wurde (beispielsweise durch ein Ausschleusen). Auch besteht ein Problem und insbesondere ein Sicherheitsnachteil darin, wenn bei einer aus der Vorrichtung ausgebauten Sensoreinrichtung 100 die Stromzuführung zur gesamten Vorrichtung nicht unterbrochen wird.

Zu diesem Zweck weist das Verbindungsrohr 50 zwischen der Fülleinrichtung 40 und der Sensoreinrichtung 100 eine während des normalen störungsfreien Betriebs mittels eines Verschlussdeckels 170 verschlossene Öffnung auf. Wird der Verschlussdeckel 170 geöffnet, dann ist das Innere des Verbindungsrohrs 50 zugänglich. Es besteht hierbei die Möglichkeit, vorbestimmte Prüfelemente (Testkörper) 180 in das Verbindungsrohr 50 einzusetzen, sodass dieser im Volumenstrom des Füllguts 20 in der Richtung, die durch die Pfeile 120 angedeutet ist, mit bewegt wird. Insbesondere wird das Prüfelement 180 in Verbindung mit dem Volumenstrom an der Sensoreinrichtung 100 vorbeigeführt, und es wird mittels der Sensoreinrichtung 100 bei fehlerfreier Funktion derselben der Metallanteil des Prüfelements 180 erkannt und ein entsprechendes Erfassungssignal an die Steuerungseinrichtung 110 abgegeben. In einem derartigen Fall kann dann beispielsweise ein Ablauf gemäß dem zweiten Betriebsmodus durchgeführt werden, sodass entweder in zeitabhängiger Weise oder portionsabhängig ein Durchschleusen erfolgt und in dem entsprechend markierten Produkt (größer als die vorbestimmte Produktgröße) das Prüfelement 180 enthalten sein muss. Dies kann im Einzelnen ebenfalls mittels einer weiteren nicht gezeigten Prüfeinrichtung überprüft werden, sodass in Abhängigkeit davon bestimmt werden kann, ob die Zeiten für die zeitabhängige Durchschleusung oder die Anzahl der Portionen für die portionsabhängige Durchschleusung korrekt und ausreichend eingestellt sind, sodass mit Sicherheit die Verunreinigung (im vorliegenden Fall das Prüfelement 180) sicher in dem markierten Produkt enthalten ist.

In gleicher Weise kann mittels eines Prüfelements 180 oder mehrerer Prüfelemente ermittelt werden, ob im Falle eines Ausschleusens auch tatsächlich das Prüfelement 180 (die simulierte Verunreinigung) ausgeschleust wurde.

Es ist somit auf einfache Weise durch Öffnen des Verschlussdeckels 170, durch Einsetzen eines oder mehrerer Prüfelemente 180 und erneutem Verschließen des Verschlussdeckels 170 möglich, eine Prüfung durchzuführen, die sowohl die reine Funktionsfähigkeit der Sensoreinrichtung 100 als auch die korrekte Einstellung der Betriebsparameter (Vorgabezeiten und Vorgabeanzahl der auszuschleusenden oder durchzuschleusenden Portionen) umfasst. Eine derartige Überprüfung mittels der Prüfelemente 180 und der einfachen Einbringmöglichkeit der Prüfelemente 180 mittels der Öffnung in dem Verbindungsrohr 50 kann somit zur Sicherheit für den Betrieb der erfindungsgemäßen Vorrichtung eine Verunreinigung simuliert und das Separieren eines verunreinigten Produkts oder das Ausschleusen mit der Verunreinigung sicher überprüft werden.

Vorzugsweise bestehen die Prüfelemente 180 aus einer Kunststoffskugel mit einem eingeschlossenen Metallkern.

Bei der erfindungsgemäßen Verpackungsvorrichtung wird die Ventileinrichtung 60 mittels Druckluft zur Umschaltung angesteuert. Hierbei wird ein vorzugsweise in der Ventileinrichtung 60 enthaltenes Kugelventil direkt mittels der Druckluft angesteuert, wobei die Verpackungsvorrichtung ein Sicherheitsdruckluftanschluss aufweist. Hierbei kann die Druckluft zum Ansteuern der Ventileinrichtung 60 und speziell des darin enthaltenen Kugelventils nur angeschlossen werden, wenn die Sensoreinrichtung 100 mit der Clipeinrichtung 90 in Verbindung steht. Dies vermeidet ein Problem, dass bei einer nicht eingebauten Sensoreinrichtung 100 ein Hineingreifen in das Kugelventil möglich ist und dieses umschalten kann, da die elektrische Steuerung noch nicht angeschlossen ist. Hierbei kann die Sensoreinrichtung 100 insgesamt aus der Vorrichtung herausgenommen werden. Dabei wird die Druckluft zwangsweise getrennt, so dass aus Gründen der Sicherheit ein auch versehentliches Anfahren (Starten) der Vorrichtung nicht möglich ist.

Gemäß dem Stand der Technik arbeitet die Clipeinrichtung 90 ohne eine elektrische Schnittstelle zu den restlichen Komponenten der Vorrichtung, und insbesondere zu der zentralen Steuerungseinrichtung 110. Vielmehr arbeitet die Clipeinrichtung 90 autark.

Die Sensoreinrichtung 100 gemäß den Figuren 1 und 2 wurde vorstehend in Verbindung mit der Erfassung von metallischen Verunreinigungen beschrieben. In Abhängigkeit von der Art der Erfassung und der Ausgestaltung der Sensoreinrichtung 100 können weitere Verunreinigung erfasst werden, die Erfindung ist auf die Erfassung von metallischen Verunreinigungen nicht beschränkt.

Die vorliegende Erfindung wurde vorstehend anhand von Ausführungsbeispielen in Verbindung mit den zugehörigen Figuren beschrieben. Es ist jedoch selbstverständlich, dass die Ausgestaltung der vorliegenden Erfindung gemäß den vorstehend beschriebenen Figuren und die für die jeweiligen Bauteile und Komponenten verwendeten Bezugszeichen in den Figuren, in der Beschreibung und in den Patentansprüchen und die genannten beispielhaften Angaben nicht eingeschränkt auszulegen sind. Vielmehr werden ais zur Erfindung gehörig sämtliche Ausführungsformen und Varianten angesehen, die unter die beigefügten Patentansprüche fallen.

## Patentansprüche

1. Verpackungsvorrichtung, mit
einer Fülleinrichtung (40) zur Förderung eines Füllguts (20),
einem an die Fülleinrichtung (40) angeschlossenen Füllrohr (70) zum Einleiten des durch die Fülleinrichtung (40) zugeführten Füllguts (20) in eine schlauchförmige Verpackungshülle (80) und Ausgeben des gebildeten Produkts,
einer in der Förderrichtung der Fülleinrichtung (40) angeordneten Clipeinrichtung (90) zum Einschnüren der Verpackungshülle (80) an einer vorbestimmten Position und Verschließen der Verpackungshülle (80) mit zumindest einem Verschlusselement,
einer zwischen der Fülleinrichtung (40) und dem Füllrohr (70) angeordneten Sensoreinrichtung (100) zur Erfassung von Verunreinigungen in dem Füllgut (20) und Ausgeben eines Erfassungssignal an einer Steuerungseinrichtung (110), wobei
die Steuerungseinrichtung (110) eine Steuerungsverbindung (160) mit der Clipeinrichtung (90) aufweist, die dazu ausgelegt ist, die Fülleinrichtung (40) derart anzusteuern, dass zeitabhängig eine entsprechende Menge des Füllguts (20) in die Verpackungshülle (80) mittels des Füllrohrs (70) eingefüllt werden kann, wobei die Steuerungseinrichtung (110) vorgesehen ist, bei Ausbleiben des Erfassungssignals die Clipeinrichtung (90) anzusteuern zur Bildung eines Produkts mit einer vorbestimmten Produktgröße, und bei Vorliegen des Erfassungssignals die Clipeinrichtung (90) anzusteuern zur Erzeugung einer Produktgröße, die größer oder kleiner ist als die vorbestimmte Produktgröße.

2. Vorrichtung nach Anspruch 1, wobei die Steuerungseinrichtung (110) vorgesehen ist, während des Betriebs der Fülleinrichtung (40) die Clipeinrichtung (90) bei Vorliegen des Erfassungssignals der Sensoreinrichtung (100) zur Unterbrechung ihres Betriebs in vorbestimmter Weise anzusteuern.

3. Vorrichtung nach Anspruch 2, wobei die Unterbrechung des Betriebs der Clipeinrichtung (90) das Unterbrechen zumindest eine Funktion des Portionierens, des Verschließens mittels eines Verschlusselements und des Durchführens eines Trennschnitts zur Bildung der vorbestimmten Produktgröße umfasst.

4. Vorrichtung nach Anspruch 2 oder 3, wobei die Steuerungseinrichtung (110) vorgesehen ist, die Clipeinrichtung (90) zur Unterbrechung ihres Betriebs während einer vorbestimmten Zeitdauer anzusteuern, die größer ist als die Zeitdauer zur Bildung der vorbestimmten Produktgröße.

5. Vorrichtung nach Anspruch 2 oder 3, wobei die Steuerungseinrichtung (110) vorgesehen ist, die Clipeinrichtung (90) zur Unterbrechung ihres Betriebs während des Betriebs der Fülleinrichtung (40) zur Bildung einer vorbestimmten Anzahl der vorbestimmten Produktgröße anzusteuern.

6. Vorrichtung nach Anspruch 1, ferner mit einer Ventileinrichtung (60), die zwischen der Sensoreinrichtung (100) und dem Füllrohr (70) angeordnet und vorgesehen ist, in Abhängigkeit von einer Steuerung durch die Steuerungseinrichtung (110) das von der Fülleinrichtung (40) bereitgestellte Füllgut entweder zu dem Füllrohr (70) zur Bildung des Produkts oder zu einem an der Ventileinrichtung (60) angeordneten Ablaufrohr (130) zum Ausschleusen des Füllguts (20) zu leiten.

7. Verfahren zur Steuerung einer Verpackungsvorrichtung, mit den Schritten:
Fördern eines Füllguts in einem Volumenstrom durch ein Füllrohr (70) in eine schlauchförmige Verpackungshülle (80) und Ausgeben des in der Verpackungshülle (80) befindlichen Füllguts (20),
Einschnüren der gefüllten Verpackungshülle (80) an einer vorbestimmten Position und Verschließen der Verpackungshülle (80) mit zurründest einem Verschlusselement zur Bildung eines Produkts mit einer vorbestimmten Produktgröße,
Erfassen einer Verunreinigung in dem Füllgut (20) und Ausgeben eines Erfassungssignals an einer Steuerungseinrichtung (110),
Bilden einer Steuerungsverbindung (160) zwischen der Steuerungseinrichtung (110) und der Clipeinrichtung (90) zur Ansteuerung der Clipeinrichtung (90), und
Ansteuern der Clipeinrichtung (90) in Abhängigkeit von der Ausgabe des Erfassungssignals in vorbestimmter Weise zur Bildung einer Produktgröße, die größer oder kleiner ist als die vorbestimmte Produktgröße, wenn das Erfassungssignal vorliegt, und zur Bildung einer Produktgröße entsprechend der vorbestimmten Produktgröße, wenn das Erfassungssignal nicht vorliegt.

8. Verfahren nach Anspruch 7, ferner mit dem Schritt des Ansteuerns der Clipeinrichtung (90) während des Betriebs der Fülleinrichtung (40) bei Vorliegen des Erfassungssignals zur Unterbrechung des Betriebs der Clipeinrichtung (90).

9. Verfahren nach Anspruch 8, wobei die Unterbrechung des Betriebs der Clipeinrichtung (90) das Unterbrechen zumindest einer Funktion des Portionierens, des Verschließens mittels des Verschlusselements und des Durchführens eines Trennschnitts zur Bildung der vorbestimmten Produktgröße umfasst.

10. Verfahren nach Anspruch 7, ferner mit dem Schritt des Ansteuerns der Clipeinrichtung (90) zur Unterbrechung ihres Betriebs während einer vorbestimmten Zeitdauer, die größer ist als die Zeitdauer zur Bildung der vorbestimmten Produktgröße.

11. Verfahren nach Anspruch 7, ferner mit dem Schritt des Ansteuerns der Clipeinrichtung (90) zur Unterbrechung ihres Betriebs während des Betriebs der Fülleinrichtung (40) zur Bildung einer vorbestimmten Anzahl der vorbestimmten Produktgröße, wobei das Unterbrechen zumindest eine Funktion des Portionierens, des Verschließens mittels eines Verschlusselements und des Durchführens eines Trennschnitts zur Bildung der vorbestimmten Produktgröße umfasst.

12. Verfahren nach Anspruch 7, ferner mit der Unterdrückung des Betriebs der Fülleinrichtung (40), Ausgeben eines Warnsignals und Stillsetzen der Vorrichtung.

13. Verfahren nach einem der Ansprüche 7 bis 12, ferner mit dem Schritt des Beendens des Betriebs der Fülleinrichtung (40) bei dem Vorliegen des Erfassungssignals mit einer einstellbaren Zeitverzögerung bis zur tatsächlichen Beendigung des Betriebs der Fülleinrichtung (40).

## Claims

1. A packaging apparatus, comprising
a filling device (40) for the delivery of a filling material (20),
a filling tube (70) connected to the filling device (40) for inserting the filling material (20) fed by the filling device (40) in a tubular casing (80) and dispensing the formed product,
a clipping device (90) being arranged in the filling direction of the filling device (40) for constricting the casing (80) at a predetermined position and closing the casing (80) by at least one closure element,
a sensing device (100) located between the filling device (40) and the filling tube (70) for sensing of contamination in the filling material (20) and emitting a sensing signal to a control unit (110), wherein
the control unit (110) comprises a control connection (160) with the clipping device (90), being able to control the filling device (40) such that a respective amount of the filling material (20) can be filled time-dependent in the casing (80) via the filling tube (70), wherein
the control unit (110) is provided to control the clipping device (90) in the absence of the sensing signal for forming a product with a predetermined product size, and in the presence of the sensing signal to control the clipping device (90) for forming a product size being bigger or smaller than the predetermined product size.

2. The apparatus as claimed in claim 1, wherein the control unit (110) is provided to control the clipping device (90) during the operation of the filling device (40) in the presence of the sensing signal of the sensing device (100) for interrupting its operation in a predetermined manner.

3. The apparatus as claimed in claim 2, wherein the interruption of the operation of the clipping device (90) comprises the interruption of at least one function of the portioning, the closing via a closing element and the performing of a cut for forming the predetermined product size.

4. The apparatus as claimed in claims 2 or 3, wherein the control unit (110) is provided to control the clipping device (90) to interrupt its operation during a predetermined time period, being bigger than the time period for forming the predetermined product size.

5. The apparatus as claimed in claims 2 or 3, wherein the control unit (110) is provided to control the clipping device (90) to interrupt its operation during the operation of the filling device (40) for forming a predetermined number of the predetermined product size.

6. The apparatus as claimed in claim 1, further comprising a valve device (60), being arranged between the sensing device (100) and the filling tube (70) and suitable, depending on the controlling by the control unit (110), to guide the filling material provided by the filling device (40) either to the filling tube (70) for forming the product or to a drain pipe (130) arranged on the valve device (60) for discharging the filling material (20).

7. A method for controlling of a packaging apparatus, comprising the steps of:
delivery of a filling material in a volume flow through a filling tube (70) in a tubular casing (80) and dispensing the filling material being located in the casing (80),
constricting the filled casing (80) at a predetermined position and closing of the casing (80) by at least one closure element for forming a product with a predetermined product size,
sensing of a contamination in the filling material (20) and emitting a sensing signal to a control unit (110),
forming of a control connection (160) between the control unit (110) and the clipping device (90) for controlling of the clipping device (90), and
controlling of the clipping device (90) depending on the emitting of the sensing signal in a predetermined manner for forming a product size being bigger or smaller than the predetermined product size, while the sensing signal is present, and for forming of a product size adequate to the predetermined product size, while the sensing signal is not present.

8. The method as claimed in claim 7, further comprising the step of controlling the clipping device (90) during the operation of the filling device (40) when the sensing signal is present for the interruption of the operation of the clipping device (90).

9. The method as claimed in claim 8, wherein the interruption of the operation of the clipping device (90) comprises the interruption of at least one function of the portioning, the closing via a closing element and the performing of a cut for forming the predetermined product size.

10. The method as claimed in claim 7, further comprising the step of controlling of the clipping device (90) for the interruption of its operation during a predetermined time period, being bigger than the time period for forming of the predetermined product size.

11. The method as claimed in claim 7, further comprising the step of controlling of the clipping device (90) for the interruption of its operation during the operation of the filling device (40) for forming of a predetermined number of the predetermined product size, wherein the interruption comprises at least one function of the portioning, the closing via a closing element and the performing of a cut for forming the predetermined product size.

12. The method as claimed in claim 7, further with the depression of the operation of the filling device (40), emitting a warning signal, and stopping the device.

13. The method as claimed in any of the claims 7 to 12, further comprising the step of finishing the operation of the filling device (40) in the presence of the sensing signal with a adjustable time delay until the actual completion of the operation of the filling device (40).

## Revendications

1. Installation d'emballage, comprenant
un dispositif (40) de remplissage, pour le transport d'un produit (20) de remplissage,
un tube (70) de remplissage, qui est raccordé au dispositif (40) de remplissage et qui est destiné à introduire le produit (20) de remplissage apporté par le dispositif (40) de remplissage dans une gaine (80) tubulaire d'emballage et à faire sortir le produit formé,
un dispositif (90) d'agrafage, qui est monté dans la direction de transport du dispositif (40) de remplissage et qui est destiné à serrer la gaine (80) d'emballage en une position déterminée à l'avance et à fermer la gaine (80) d'emballage par au moins un élément de fermeture,
un dispositif (100) formant capteur, qui est monté entre le dispositif (40) de remplissage et le tube (70) de remplissage et qui est destiné à détecter des impuretés dans le produit (20) de remplissage et à émettre un signal de détection vers un dispositif (110) de commande, dans laquelle
le dispositif (110) de commande comporte une liaison (160) de commande avec le dispositif (90) d'agrafage, conçue pour commander le dispositif (40) de remplissage, de manière à pouvoir introduire au moyen du tube (70) de remplissage en fonction du temps une quantité adéquate du produit (20) de remplissage dans la gaine (80) d'emballage, dans laquelle
le dispositif (110) de commande est prévu pour, en l'absence du signal de détection, commander le dispositif (90) d'agrafage, afin de former un produit ayant une dimension de produit déterminée à l'avance, et, en présence du signal de détection, commander le dispositif (90) d'agrafage, pour produire une dimension de produit qui est plus grande ou plus petite que la dimension de produit déterminée à l'avance.

2. Installation suivant la revendication 1, dans laquelle le dispositif (110) de commande est prévu pour commander d'une façon déterminée à l'avance pendant le fonctionnement du dispositif (40) de remplissage le dispositif (90) d'agrafage en présence du signal de détection du dispositif (100) formant capteur pour en interrompre le fonctionnement.

3. Installation suivant la revendication 2, dans laquelle l'interruption du fonctionnement du dispositif (90) d'agrafage comprend l'interruption d'au moins une fonction de la mise en portion de la fermeture au moyen d'un élément de fermeture et de la mise en oeuvre d'une section de coupe pour la formation de la dimension de produit déterminée à l'avance.

4. Installation suivant la revendication 2 ou 3, dans laquelle le dispositif (110) de commande est prévu pour commander le dispositif (90) d'agrafage pour en interrompre le fonctionnement pendant une durée déterminée à l'avance qui est plus grande que la durée de formation de la dimension de produit déterminée à l'avance.

5. Installation suivant la revendication 2 ou 3, dans laquelle le dispositif (110) de commande est prévu pour commander le dispositif (90) d'agrafage pour en interrompre le fonctionnement pendant le fonctionnement du dispositif (40) de remplissage pour la formation d'un nombre déterminé à l'avance de produits de dimension déterminée à l'avance.

6. Installation suivant la revendication 1, comprenant, en outre, un dispositif (60) de vanne, qui est disposé et prévu entre le dispositif (100) formant capteur et le tube (70) de remplissage, qui envoie, en fonction d'une commande par le dispositif (110) de commande, le produit de remplissage préparé par le dispositif (40) de remplissage au tube (70) de remplissage, pour la formation du produit ou pour l'évacuation du produit (20) de remplissage à un tube (130) d'évacuation monté sur le dispositif (60) de vanne.

7. Procédé de commande d'une installation d'emballage, comprenant les stades, dans lesquels :
on transporte un produit de remplissage en un courant en volume dans un tube (70) de remplissage pour l'envoyer dans une gaine (80) tubulaire d'emballage et on fait sortir le produit (20) de remplissage se trouvant dans la gaine (80) d'emballage,
on serre la gaine (80) d'emballage remplie en une position déterminée à l'avance et on ferme la gaine (80) d'emballage par au moins un élément de fermeture, pour la formation d'un produit ayant une dimension déterminée à l'avance,
on détecte une impureté dans le produit (20) de remplissage et on émet un signal de détection vers un dispositif (110) de commande,
on forme une liaison (160) de commande entre le dispositif (110) de commande et le dispositif (90) d'agrafage, pour commander le dispositif (90) d'agrafage, et
on commande le dispositif (90) d'agrafage en fonction de l'émission du signal de détection d'une manière déterminée à l'avance, pour la formation d'une dimension de produit, qui est plus grande ou plus petite que la dimension de produit déterminée à l'avance, lorsque le signal de détection est présent, et pour la formation d'une dimension de produit correspondant à la dimension de produit déterminée à l'avance, lorsque le signal de détection n'est pas présent.

8. Procédé suivant la revendication 7, comprenant, en outre, le stade de la commande du dispositif (90) d'agrafage pendant le fonctionnement du dispositif (40) de remplissage en présence du signal de détection, pour l'interruption du fonctionnement du dispositif (90) d'agrafage.

9. Procédé suivant la revendication 8, dans lequel l'interruption du fonctionnement du dispositif (90) d'agrafage comprend l'interruption d'au moins une fonction de mise en portion de la fermeture au moyen de l'élément de fermeture et de la mise en oeuvre d'une coupe de séparation, pour la formation de la dimension de produit déterminée à l'avance.

10. Procédé suivant la revendication 7, comprenant, en outre, le stade de la commande du dispositif (90) d'agrafage, pour en interrompre le fonctionnement pendant une durée déterminée à l'avance, qui est plus grande que la durée de formation de la dimension de produit déterminée à l'avance.

11. Procédé suivant la revendication 7, comprenant, en outre, le stade de la commande du dispositif (90) d'agrafage, pour en interrompre le fonctionnement pendant le fonctionnement du dispositif (40) de remplissage, pour la formation d'un nombre déterminé à l'avance de produits de dimension déterminée à l'avance, l'interruption comprenant au moins une fonction de la mise en portion de la fermeture au moyen d'un aimant de fermeture et de la mise en oeuvre d'une coupe de séparation, pour la formation de la dimension de produit déterminée à l'avance.

12. Procédé suivant la revendication 7, comprenant, en outre, la suppression du fonctionnement du dispositif (40) de remplissage, l'émission d'un signal d'alerte et la mise à l'arrêt de l'installation.

13. Procédé suivant l'une des revendications 7 à 12, comprenant, en outre, le stade dans lequel on met fin au fonctionnement du dispositif (40) de remplissage en présence du signal de détection avec un retard réglable dans le temps jusqu'à ce que l'on mette fin réellement au fonctionnement du dispositif (40) de remplissage.
